# EUROPEAN PATENT APPLICATION

(11) **EP 4 365 579 A1**
(43) Date of publication of application: **08.05.2024**
(21) Application number: 22205811.7
(22) Date of filing: 07.11.2022
(51) Int. Cl.: G01N 22/00

(54) **APPARATUS FOR AND METHOD OF MEASURING MOVING WEB**

(71) Applicant: Valmet Automation Oy, 02150 Espoo (FI)
(72) Inventor: Graeffe, Jussi, 02150 Espoo (FI); Mäntylä, Markku, 02150 Espoo (FI); Jakkula, Pekka, 02150 Espoo (FI); Limingoja, Matti, 02150 Espoo (FI)
(74) Representative: Kolster Oy Ab

(57) **Abstract**

An apparatus for measuring a moving fiber web (10) comprises an electromagnetic source (100) and a transmission antenna (102), the electromagnetic source (100) outputting electromagnetic radiation in a millimeter or micrometer wave band, and the transmission antenna (100) transmitting the electromagnetic radiation toward the moving fiber web (10). A counterpart (104, 300) to the transmitting antenna (102) interacts with the electromagnetic radiation passed through the moving fiber web (10). A reception antenna (104) receives the electromagnetic radiation passed at least once through the moving fiber web (10), reference information relating to a phase value and an attenuation value of the electromagnetic radiation caused by a physical length of a propagation path between the transmission antenna (102) and the reception antenna (104) being available. A signal processing device (106) determines at least one of dry stuff content, weight of water per unit of area, moisture and grammage of the moving fiber web (10) based on the reference information, and a measured attenuation value and a measured phase value caused by the fiber web (10).

## Description

### Field

The invention relates to an apparatus of and a method for measuring a moving web.

### Background

In paper industry, measurement of properties of a moving web are important. Typically, oven dry weight and water weight and basis weight, each per unit of area, are of interest.

The basis weight has traditionally been measured using gamma- or beta-rays which are radioactive. The radioactive radiation is dangerous to human health and its use has a very tight legislative control in each country. The use of radioactive material requires a special permission which is difficult to receive. There have been alternative approaches which utilize microwave radiation in these measurements, but they have certain drawbacks. Oven dry weight and water weight area measured at different locations of the web. The distance varies between the sensor parts. The web has a non-constant microwave conductivity and measurement depends on temperature. Hence, there is a need to improve the measurements.

### Brief description

The present invention seeks to provide an improvement in the measurements.

The invention is defined by the independent claims. Embodiments are defined in the dependent claims.

If one or more of the embodiments is considered not to fall under the scope of the independent claims, such an embodiment is or such embodiments are still considered useful for understanding features of the invention.

### List of drawings

Example embodiments of the present invention are described below, by way of example only, with reference to the accompanying drawings, in which
Figure 1 illustrates an example of an apparatus for measuring properties of a moving web;
Figure 2 illustrates an example of utilization of a reflector;
Figure 3 illustrates an example of an inductive distance measurement;
Figure 4A illustrates an example of an annular inductive sensor;
Figure 4B illustrates an example of usage of a plurality of inductive sensors;
Figure 5 illustrates an example of utilization of protective arrangement to alleviate disturbance caused by reflections;
Figure 6 illustrates an example of tilting the apparatus for alleviating disturbance caused by reflections;
Figure 7 illustrates an example of the processing unit with at least one processor and memory;
Figure 8A illustrates an example of a disturbing reflection and a measurement signal in an intermediate band;
Figure 8B illustrates an example of the measured signal being disturbed by a reflection in a sweep and/or frequency hopping;
Figure 9A illustrates an example of a traversing measurement;
Figure 9B illustrates examples of a traversing measurement and a row measurement;
Figure 10 illustrates an example of the apparatus with a plurality of features;
Figure 11 illustrates of an example of a flow chart of a measuring method.

### Description of embodiments

The following embodiments are only examples. Although the specification may refer to "an" embodiment in several locations, this does not necessarily mean that each such reference is to the same embodiment(s), or that the feature only applies to a single embodiment.

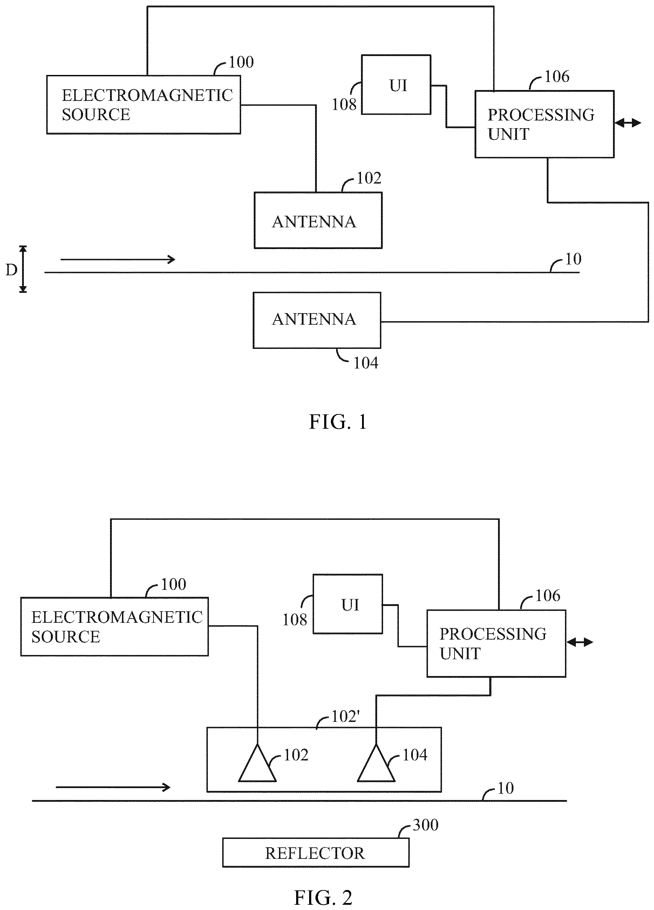

Fig. 1 illustrates an example of an apparatus for measuring a moving fiber web 10. The fiber web 10 may refer to a cellulose, paper or board web 10. Alternatively or additionally, the fiber web 10 may refer to a synthetic fiber web 10. Still alternatively or additionally, the fiber web 10 may include fibers and additives, for example.

The measurements may be applied in a drying machine. An example of drying machine is a pulp drying machine which is similar to a drying section of a paper machine. The drying may be performed using one or more drying cylinders, which are in contact with the web 10, and/or one or more airborne dryers which blow heated air to the web 10. The drying is mainly based on evaporation in this section/machine. A person skilled in the art is familiar with the moving web 10 and drying, *per se.*

The apparatus comprises an electromagnetic source 100 and a transmission antenna 102. The electromagnetic source 100 outputs electromagnetic radiation in a millimeter or micrometer wave band. The electromagnetic source 100 may include an oscillator that generates the electromagnetic radiation. The electromagnetic source 100 may include a magnetron arrangement, a traveling-wave tube arrangement, a gyrotron arrangement, a klystron arrangement, a field-effect transistor arrangement, a tunnel diode arrangement, a Gunn diode arrangement, an impact ionization avalanche transit-time diode arrangement or the like, for example. The electromagnetic source may be based on CMOS (Complementary Metal-Oxide Semiconductor), HEMT (High-Electron-Mobility Transistor) tai HBT (Heterojunction Bipolar Transistors) technologies, for example, where, as an example, the semiconductors may be SiGe, InP, GaAs and/or GaN, without limiting to these.

The transmission antenna 100 transmits the electromagnetic radiation toward the moving fiber web 10. The electromagnetic radiation is within about 30 GHz to about 1000 GHz.

The apparatus also comprises a counterpart to the transmitting antenna 102. The counterpart interacts with the electromagnetic radiation passed through the moving fiber web 10. The counterpart may comprise either a reflector 300 or a reception antenna 104.

The reception antenna 104 receives the electromagnetic radiation passed at least once through the moving fiber web 10. A phase value and an attenuation value of the electromagnetic radiation depends on a physical length of a propagation path between the transmission antenna 102 and the reception antenna 104 in addition to the effect caused by the fiber web 10, and that is why it should be known in order to be able to measure the fiber web 10.

The physical length refers to an actual distance between the transmission antenna 102 and the reception antenna 104 without the web 10. Then a permittivity within the propagation path does not vary at all or significantly related to the measurement, and typically is at least about the same as in vacuum or in the air. As a result, the actual physical length of a propagation path between the transmission antenna 102 and the reception antenna 104 causes a predictable phase value and a predictable attenuation value at each moment of measurement. It may also be considered that the predictable phase value and the predictable attenuation value are predetermined and/or known at each moment of measurement and they are the calibration values.

There are a variety of possibilities to detect phase and form the phase value for the calibration and for the measurement of the fiber web 10, and a person skilled in the art is familiar with them, *per se.* As an example, the phase value may be formed by multiplying the electromagnetic radiation received by the reception antenna 104 by a reference electromagnetic radiation a frequency and phase of which is known and/or determined with respect to the electromagnetic radiation that is generated by the electromagnetic source 100. The multiplication of electromagnetic signals may also be called mixing. Alternatively or additionally, the frequency and phase of the reference electromagnetic radiation may be known and/or determined with respect to the electromagnetic radiation that is transmitted by the transmission antenna 102. In this manner, the phase value depends on a phase difference between the transmitted signal and the received signal. This kind of measurement is (like) a measurement performed with a phase-lock loop detector. An alternative to this is a quadrature detector, for example.

The phase difference between the transmitted signal and the received signal without the web 10 can be understood to be a calibration value. When the fiber web 10 is inserted in the propagation path, the phase value depends on properties of the fiber web 10, which allows a measurement of the fiber web 10. The measurement without the web 10 based on a known permittivity may be repeated regularly during use for keeping the apparatus calibrated.

The attenuation value, in turn, can be considered a ratio between a strength of the electromagnetic radiation received by the reception antenna 104 and the electromagnetic radiation transmitted by the transmission antenna 102. The strength or intensity of electromagnetic radiation can be measured using a power meter, which a person skilled in the art is familiar with, *per se,* which can be used to determine attenuation as a ratio between two signals. The strength or intensity of electromagnetic radiation can also be measured based on in-phase and quadrature (IQ) components of the intermediate frequency. A person skilled in the art is familiar with IQ-demodulation, *per se.*

The apparatus has reference information relating to the phase value and the attenuation value of the electromagnetic radiation available because said values are caused by the physical length of the propagation path between the transmission antenna 102 and the reception antenna 104 without the fiber web 10. Both the phase value and the attenuation value of the reference information may be constant over time, or both or either of them varies in a known manner as a function of time. The phase value may vary in a deterministic manner as a function of time periodically, for example.

The signal processing device 106 determines at least one of dry stuff content, weight of water per unit of area, moisture and grammage of the moving fiber web 10 based on the reference information, and measured attenuation value and measured phase value caused by the fiber web 10. That is, only one property of the web 10 may be determined. Alternatively, two properties of the web 10 may be determined. Still alternatively, three properties of the web 10 may be determined. Finally, all four properties of the dry stuff content, the weight of water per unit of area, the moisture and the grammage of the moving fiber web 10 may be determined. It is useful to notice that the attenuation value and the phase value depend differently on dry stuff. Similarly, the attenuation value and the phase value depend differently on water of the fiber web10 which makes it possible to determine all and/or any of said values with a single measurement.

For example, within frequencies 118 GHz - 142 GHz the sensitivities are following for the phase measured in degrees (°): sensitivity to water 0,649°/g and to dry stuff 0,225°/g which means that the phase is about 3 times more sensitive to water than to dry stuff. For the attenuation, the sensitivity in decibels (dB) goes as follows: sensitivity to water 0,09 dB/g and to dry stuff 0,003 dB/g which means that attenuation is about 30 times more sensitive to water than to dry stuff.

In an embodiment, the electromagnetic source 100 may sweep electromagnetic radiation over a frequency range, and the transmission antenna 102 transmits the electromagnetic radiation swept over the frequency range toward the moving web 10. Alternatively or additionally, the electromagnetic source 100 may perform a frequency hopping of the electromagnetic radiation for outputting of discrete frequencies within the frequency range. The discrete frequencies include different frequencies with respect to each other. In this manner, the phase value may vary deterministically as a function of time periodically. The discrete frequencies may be produced by a discrete sweep over the frequency range. The discrete frequencies may be produced by a determinate, pseudo-random or a random selection of frequencies within the frequency range. In the determinate, pseudo-random and the random selection, the selection may be limited such that any one frequency of the discrete frequencies may be selected only once until all discrete frequencies have been selected during one period for a measurement. A next measurement may repeat the selection in a similar or different order. Each measurement is performed during one period. Successive measurements are performed during successive periods.

In an embodiment, the frequency range over which the sweeping or frequency hopping is performed may be about 5 GHz to about 40 GHz, for example. The sweeping may be realized using a voltage controlled oscillator (VCO), for example. In an embodiment, the range over which the sweeping is performed may be about 10 GHz. In an embodiment, a frequency range over which the sweeping is performed may be about a few tens of GHz, such as from about 118 GHz to about 142 GHz which results in about 24 GHz. In an embodiment, a range over which the sweeping is performed may be about 100 GHz. In an embodiment, the range over which the sweeping is performed may be about a few hundreds of GHz.

A number of different frequencies of the frequency hopping in the measurement is at least two. In an embodiment, the number of different frequencies may be about 10 or tens, for example. In an embodiment, the number of different frequencies may be about 100 or hundreds, for example. In an embodiment, the number of different frequencies may be about 1000 or thousands, for example, and so on which may continue until the frequency hopping has the same frequency resolution as the frequency sweep. Still, the frequency hopping does not necessarily go the frequencies through in an order of their numerical value like sweeping although it may.

The apparatus may additionally comprise a user interface 108. The user interface means an input/output device. Non-limiting examples of a user interface include a touch screen, other electronic display screen, keyboard and mouse. The user interface 108 may present information on the measurement which include the at least one of dry stuff content, weight of water per unit of area, moisture and grammage of the moving web 10. Additionally, the user interface 108 may be used to input data, measurement algorithm and/or commands in the apparatus.

In an embodiment an example of which is illustrated in Fig. 1, the transmission antenna 102 and the reception antenna 104 are on opposite sides of the moving web 10. The transmission antenna 102 and the reception antenna 104 typically comprise material surfaces, such as a radome or a lens and/or one or more other non-ideal structures, which may be a cause of undesired reflections associated with interaction with the electromagnetic radiation. The material surfaces are also present with their disadvantages in an embodiment an example of which is illustrated in Fig. 2. By having a longer free path without reflective/disturbing surfaces between the transmission and reception antennas 102, 104 than distances between potential reflecting and/or scattering surfaces, it is possible to reduce undesirable reflections at the reception antenna 104. Namely, reflections are not fully parallel to the radiation axis of the electromagnetic radiation, and the longer the distance between the transmission and reception antennas 102, 104, the further the reflections deviate laterally from the radiation axis and thus also the reception antenna 104 in the surface free path.

In an embodiment an example of which is illustrated in Fig. 2, the transmission antenna 102 and the reception antenna 104 may be on the same side of the web 100. The transmission antenna 102 and the reception antenna 104 may reside in a transmission and reception arrangement 102'. In an embodiment, the transmission and reception arrangement 102' may be an integrated structure that includes both transmission antenna 102 and the reception antenna 104. In an embodiment, the transmission and reception arrangement 102' may comprise a transceiver, where the same antenna both transmits and receives. A reflector 300 may reside on the opposite side of the web 10 to the transmission antenna 102 and the reception antenna 104. The reflector 300 reflects the electromagnetic radiation transmitted by the transmitter antenna 102 toward the web 10 and passed through the web 10 toward the reception antenna 104.

The reflector 300 may comprise a plate a surface of which is electrically conductive. Alternatively, the plate may be electrically conductive. The plate may comprise a metal plate, metal corner reflector or a metal mesh. The largest opening of the mesh depends on the wavelength of the electromagnetic radiation, and the largest opening of the mesh should be smaller than the wavelength of the electromagnetic radiation. In an embodiment, the largest opening of the mesh should be at least about two times smaller than the wavelength of the electromagnetic radiation.

In an embodiment an example of which is illustrated in Fig. 2, the apparatus may comprise a transceiver antenna of the transmission and reception arrangement 102', which is configured to both transmit and receive the electromagnetic radiation.

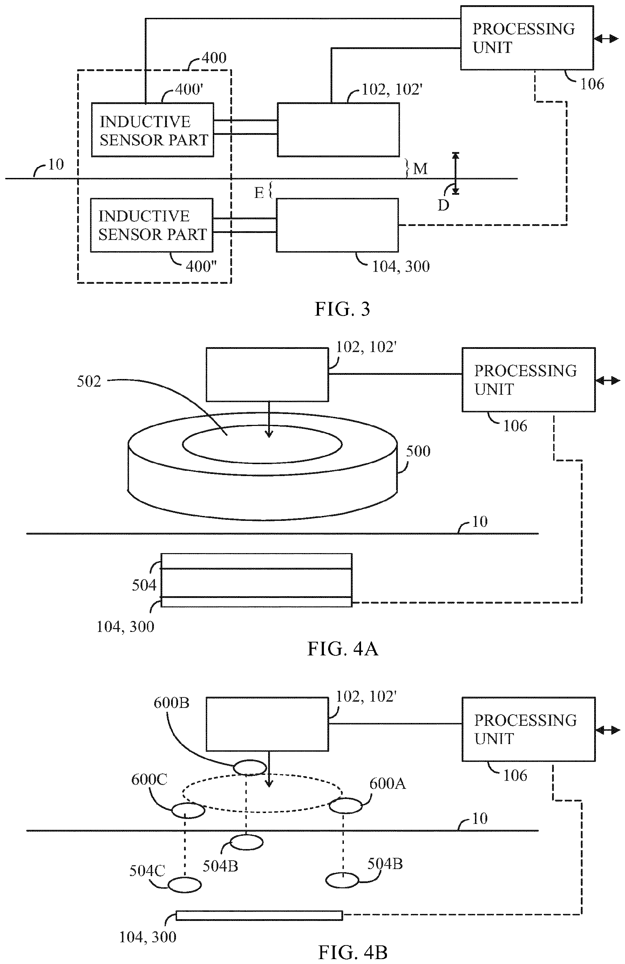

In an embodiment with reference to Fig. 3, a distance E between the reflector or reception antenna 104, 300 and the web 10 may be longer than a distance M between the transmission antenna or transmission and reception arrangement 102' and the web 10. In this manner, reflections and scattering may be alleviated which enables reliable and accurate measurement results.

In an embodiment an example of which is also illustrated in Figure 3, the apparatus may comprise an inductive distance measurement arrangement 400 which measures an effective distance D relating deterministically to the propagation distance travelled by the electromagnetic radiation between the transmission antenna 102 and the reception antenna 104. The signal processing device 106 may determine the at least one of the dry stuff content, the weight of water per unit of area, the moisture and the grammage of the moving web 100 based additionally on the effective distance D.

The distance measurement device 400 may comprise an inductive proximity sensor. An example of such sensors is an eddy current sensor, which comprises a coil as a first distance measurement device part 400' and a ferromagnet as a second distance measurement device part 400" (or vice versa). If the distance between the distance measurement device parts 400', 400" that are on opposite sides of the moving web 10 varies, the inductance of the coil also varies in a corresponding manner. When the distance measurement device parts 400', 400" have a fixed structural connection with the transmission antenna 102 and the reception antenna 104, the distance variation between the transmission antenna 102 and the reception antenna 104 is deterministically conveyed through the structural connection to a distance variation between the distance measurement device parts 400', 400" (see also Fig. 1).

When the distance measurement device part 400' has a fixed structural connection with the transmission antenna 102 and the reception antenna 104 and the distance measurement device part 400" has a fixed structural connection with the reflector, the distance variation between reflector 300, and the transmission antenna 102 and the reception antenna 104 is deterministically conveyed through the structural connection to a distance variation between the distance measurement device parts 400', 400" (see also Fig. 2).

A material connection may be between the measurement part 400' and the transmission antenna 102 and/or the transmission and reception arrangement 102'. Correspondingly, the material connection may be between the measurement part 400" and the reception antenna 104 or the reflector 300. The structural connection may refer to a mechanical attachment using solid material, for example. When the reflector 300 is utilized, a distance D between or deterministically relating to a transmitting and receiving arrangement 102' and the reflector 300 may be measured. In this manner, the distance between the propagation distance can be measured with an error equal to or less than about 1 µm.

In an embodiment an example of which is illustrated in Fig. 4A, the inductive distance measurement arrangement 400 may comprise an inductor 500, which can also be considered a coil. The inductor 500 is drawn above the web 10 and the inductor 500 may in reality be above the web 10 but alternatively the inductor 500 may also be below the web 10. The inductor 500 may be annular. The inductor 500 has a plurality of circular windings of electrical conductor encircling a radiation channel 502. Then the transmission antenna 102 or the transmission and reception arrangement 102' may transmit the electromagnetic radiation through the radiation channel 502 of the inductor 500. The radiation channel 502 means that a part within a circumference of the inductor 500 includes material that allows the electromagnetic radiation used in the measurement to pass through. Alternatively, the radiation channel 502 may refer to a hole or opening that has no material (except environmental gas such as air). The transmission antenna 102 or the transmission and reception arrangement 102' may transmit the electromagnetic radiation through the radiation channel 502 in a middle of the inductor 500.

The inductor 500 and an electrically conductive material 504 on the opposite side of the web 10 may interact with each other (conductive material 504 has not been drawn three dimensionally like the annular inductor in Fig. 4A). The conductive material 504 may also be annular for allowing the electromagnetic radiation to travel to receiver 104 or the reflector 300 on the opposite side of the web 10 with respect to the transmission antenna 102. In an embodiment, the electrically conductive material 504 is at a known distance from the reflector 300 while the inductor 500 is at a known distance from the transmission antenna 102. In an embodiment, the electrically conductive material 504 is at a known distance from the reception antenna 104 while the inductor 500 is at a known distance from the transmission antenna 102.

In an embodiment, a variable magnetic field can be generated by the inductor 500 when an oscillating current is fed to the inductor. When the distance D between the inductor 500 and the electrically conductive material 504, which may be ferrous metal such as iron, for example, becomes shorter, the increase of the flow of the eddy current in the electrically conductive material 504 decreases amplitude of the oscillation of the magnetic field. When the distance D increases, the amplitude of the oscillation also increases. If the electrically conductive material 504 is non-ferrous metal such as aluminum or copper, for example, a shortening distance causes an increase in the oscillation frequency and vice versa. As a result, the amplitude of the variation of the magnetic field can be used as a measure of the distance D. A person skilled in the art is familiar with the inductive proximity sensors, *per se.*

An alternative arrangement to the annular inductor 500 and the electrically conductive material 504 is to use three or more separate inductors 600A, 600B, 600C and corresponding three or more electrically conductive pieces of material 604A, 604B, 604C which is illustrated in Fig. 4B. Also in this manner, the propagation distance can be measured. A variation of the effective distance D may affect the phase and/or the attenuation of the electromagnetic radiation. In addition to distance, the inductive measurement based on an annular inductor 500 or at least three inductors 600A, 600B, 600C may determine an inclination of the web 10, which may be taken into account in the measurements of the dry stuff content, the water per unit area, the moisture and the grammage.

In an embodiment, a half of a distance between either the transmission antenna 102 and the reflector 300 or the reflector 300 and the reception antenna 104 may be larger than a distance travelled by the electromagnetic radiation within either of the transmission antenna or the reception antenna 102, 104, the transmission antenna 102 and the reception antenna 104 comprising material surfaces which are a cause of undesired reflections associated with interaction with the electromagnetic radiation.

In an embodiment an example of which is illustrated in Figs 3 and 4, the transmission antenna 102 and either the reception antenna 104 or the reflector 300, depending which are on opposite sides of the web 10, may comprise an inductive distance measurement arrangement 400 which measures an effective distance D relating deterministically to a propagation distance travelled by the electromagnetic radiation. The signal processing device 106 may determine the at least one of the dry stuff content, the weight of water per unit of area, the moisture and the grammage of the moving web 10 based additionally on the effective distance D.

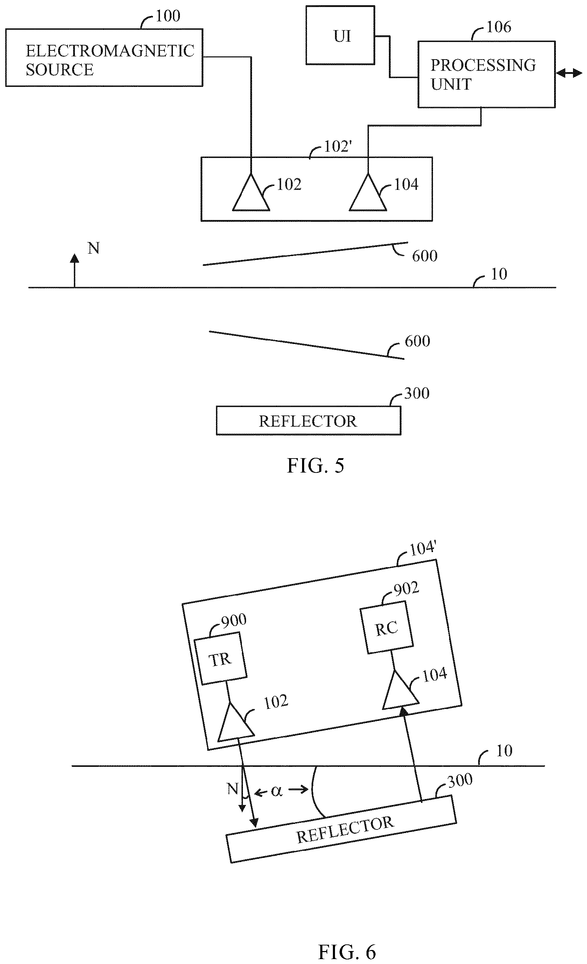

In an embodiment an example of which is illustrated in Fig. 5, the apparatus may comprise at least one protective arrangement 600 which is located in the propagation path of the electromagnetic radiation on either one side of the web 10 or both sides of the web 10. The protective arrangement 600 may be used to shield measurement system from flying particles from the web 10. The protective arrangement 600, which may be tilted with respect to the propagation direction of the electromagnetic radiation, strengthens deflection of undesired reflections of the electromagnetic radiation away from a path toward the reception antenna 104. Tilting may mean that a normal of a surface of the protective arrangement 600 deviates from the propagation direction of the electromagnetic radiation for causing a reflection to deviated from the propagation direction of the electromagnetic radiation. The tilting angle may between about 5° to 25°, for example. The protective arrangement 600 may be a plate or foil of plastic, polymer and/or composite material. The one or more plates may be thin or as thin as possible, for example thinner than 1 millimeter. In an embodiment, the protective arrangement 600 may be one or a few micrometers thick or the thickness could be multiple of the half wave lengths. The protective arrangement 600 is made of dielectric material.

In an embodiment an example of which is illustrated in Fig. 6, a propagation direction of the transmission between the transmission antenna 102 and the reception antenna 104 is inclined with respect to a normal N of the web 100. In an embodiment, the inclination angle α may be between about 5° to about 45°, for example, without limiting to the range. In an embodiment, the inclination angle α may be between about 5° to about 25°, for example, without limiting to the range. The transmission antenna 102 and reception antenna 104 may be inclined structurally (like shown in Figure 6). The transmission may be directed such that the transmission is inclined without structural inclination using beam forming and/or directing techniques. The inclination reduces interference of signals coming from the moving web 10 and the reflection from them which, in turn, reduces disturbance and improves accuracy and reliability of the measurements.

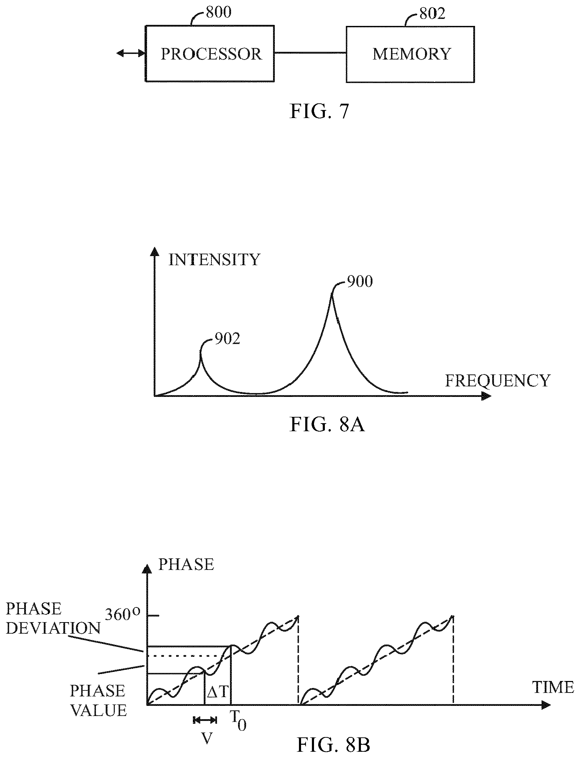

In an embodiment an example of which is illustrated in Fig. 7, the signal processing device 106, which may be or include a computer, may comprise one or more processors 800, and one or more memories 802 including computer program code. The one or more memories 802 and the computer program code are configured to, with the one or more processors 800, cause the apparatus at least to perform the following. The apparatus sweeps and/or frequency hops electromagnetic radiation over the frequency range. The apparatus transmits the electromagnetic radiation swept and/or frequency hopped over the frequency range toward the moving web 10. The frequency band of the transmitted electromagnetic radiation is within 30 GHz to 1000 GHz. The apparatus receives the electromagnetic radiation passed through the moving web 10. The apparatus then determines one property, two properties, three properties or all four properties of the web 10, the four properties being the dry stuff content, the weight of water per unit of area, the moisture and the grammage of the moving web 10 as already explained.

The term "computer" refers to a computational device that performs logical and arithmetic operations. For example, a "computer" may comprise an electronic computational device, such as an integrated circuit, a microprocessor, a mobile computing device, a laptop computer, a tablet computer, a personal computer, or a mainframe computer. A "computer" may comprise a central processing unit, an ALU (arithmetic logic unit), one or more memory units, and a control unit that controls actions of other components of the computer so that steps of a computer program are executed in a desired sequence. A "computer" may also include at least one peripheral unit that may include an auxiliary memory (such as a disk drive or flash memory), and/or may include data processing circuitry.

In an embodiment, the signal processing device 106 may mix the electromagnetic radiation received by the reception antenna 104 to an intermediate frequency band with a reference electromagnetic signal that has a known frequency and a known phase with respect to the electromagnetic radiation that is output. The known frequency and the known phase apply also to the electromagnetic radiation transmitted toward the fiber web 10 for allowing a phase of the intermediate radiation to depend on the dry stuff and the water content of the fiber web 10. Then the signal processing device 106 may determine the measured phase value and the measured attenuation value relating to the intermediate frequency. As the measurement of the phase value may be performed at any moment during the sweep and/or the frequency hopping, the phase value and the attenuation value relates to a frequency of the intermediate frequency of the electromagnetic radiation.

Fig. 8A illustrates an example of received electromagnetic signal which is swept or frequency hopped over the frequency range and arranged in an order of the values of frequencies, and mixed to an intermediate frequency band. The spectrum of the intermediate signal includes the measurement signal 900 and a disturbing reflection 902. The x-axis represents frequency in an arbitrary scale and the y-axis represents intensity of the signals in an arbitrary scale. In an embodiment, the IQ-demodulation may be applied to the intermediate band in order to determine the attenuation and/or phase value.

Fig. 8B illustrates an example of a phase signal. The x-axis represents time in an arbitrary scale and the y-axis represents a phase in a scale 0° to 360°. Also in this example, a disturbing reflection affects the measurement. The disturbing reflection remains mixed with the measurement signal and causes a variation of the measurement signal (see waves in the sweep). The variation likely leads to a phase deviation, which can be considered a phase error and thus a measurement error, when the phase is measured at a moment To. The deviation is a difference between a signal without disturbance (dashed line with slope in this example) and the same signal with the disturbance (rising signal with oscillation). The measurement of the phase value may be performed at any single moment.

When the measurement signal is band-pass filtered for eliminating or reducing the disturbing reflection 902 and other potential disturbing reflections in frequencies lower and/or higher than that of the measurement signal 900 the wave behaviour reduces to at least about a straight line, which is illustrated by a dashed sawtooth line in Fig. 8B. The signal is clean from disturbance and a phase error is eliminated or reduced because the variation in frequency of the measurement signal has been blocked or minimized by filtering. Instead of or in addition to literal filtering the disturbing reflections may also be blocked or minimized by other signal processing measures which can, however, be considered to be covered by the term filtering in this document as long as they lead to a corresponding elimination or reduction of the disturbing reflections.

A variation of the phase value caused by the moving web 10 is what is measured. Namely, the delay ΔT between the mixed electromagnetic signals varies because the propagation time of the measurement signal through the moving web 10 depends on the measured properties of the moving web 10. The variation of the delay ΔT as a function of properties of the moving web 10 also causes the phase value to vary. The variation V of the delay ΔT is shown in Fig. 8B.

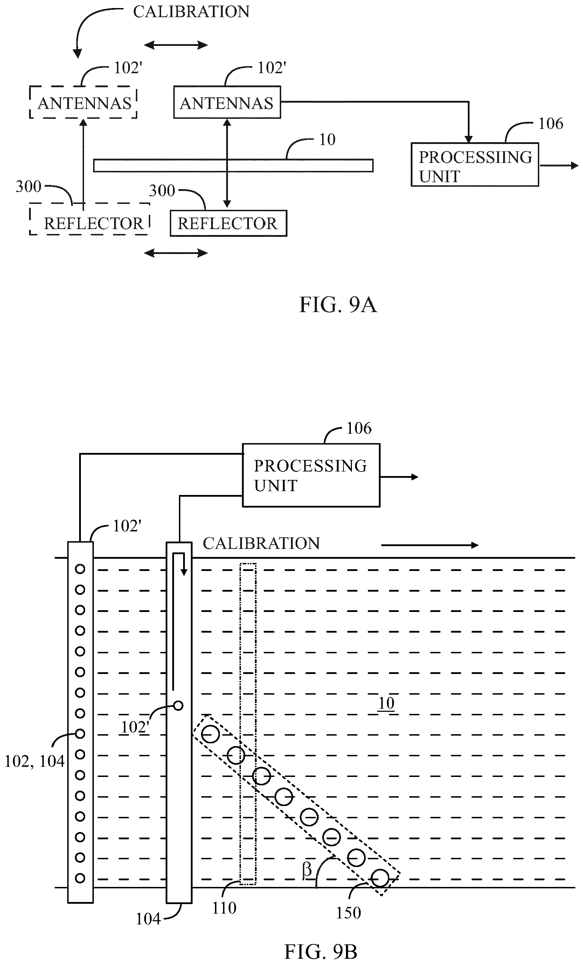

Figs 9A and 9B illustrate examples of traversing measurement and a row measurement. Fig. 9A illustrates an embodiment where the transmission antenna 102 and the reception antenna 104 are on the same side of the moving web 10, and the transmission and reception arrangement 102'and the reflector 300 are on the opposite sides of the moving web 10. The transmission and reception arrangement 102' may traverse the web 10 from side to side and the reflector 300 traverses with the transmission and reception arrangement 102'. In this manner the fiber web 10 may be measured over its whole width. Although it is not illustrated in Fig. 9A, the inductive distance measurement arrangement 400 may keep the propagation length of the electromagnetic radiation known during the traverse. The measurement can be calibrated when the transmission and reception arrangement 102' and the reflector 300 cross an edge of the web 10 and go outside the web 10. Then the web 10 is not in the propagation path of the electromagnetic radiation and air can be measured as a sample of constant permittivity.

Fig. 9B illustrate an example of both traversing measurement and a row measurement. The traversing transmission and reception arrangement 102' measures the fiber web 10 while traversing. As the fiber web 10 moves, the measured points of the fiber web 10 form a row 150 of measurement points in an angle β which depends on a traversing speed of the transmission and reception arrangement 102' and a speed of the moving fiber web 10. In an embodiment, the transmission and reception arrangement 102' may have a plurality of the transmission and reception antennas 102, 104 (transmission and reception antennas are small circles in Fig. 9B but only one is marked with reference number). The transmission and reception antennas 102, 104 have reflectors 300 on the other side of the web 10. Two or more transmission and reception antennas 102, 104 may have a common reflector 300. For calibration, the transmission and reception antennas 102, 104 of the row measurement should be moved to a position where the fiber web 10 is not in the propagation path of the electromagnetic radiation. Alternatively, the fiber web 10 should be replaced or covered with a known sample.

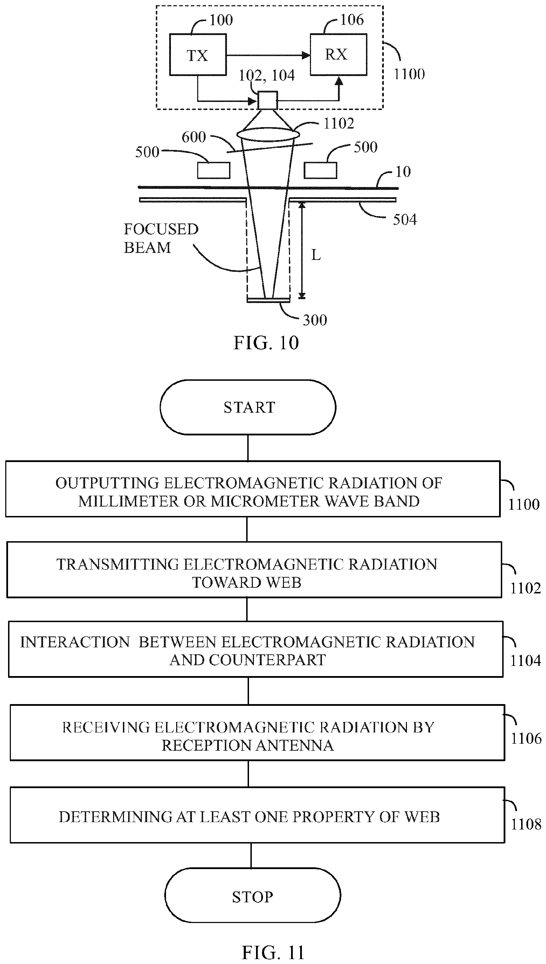

Figure 10 illustrates the apparatus with a plurality of features. The electromagnetic source 100, the transmission antenna 102, the reception antenna 104 and the signal processing device 106 may be integrated on one chip 1100. The apparatus may also have at least one lens 1102 that focuses the electromagnetic radiation toward the web 10 and also toward the reflector 300. A person skilled in the art is familiar with lenses that focus radio frequency radiation of the electromagnetic radiation in millimeter or microwave range. A distance L between the electrically conductive material 504 and the reflector 300 may be known or determined by a measurement, for example. As the inductive measurement measures the distance between the annular inductor 500 and the electrically conductive material 504 and as the distance between the annular inductor 500 and the transmission antenna 102 and the reception antenna 104 is known or determined, the propagation length of the electromagnetic radiation is also known.

The lens 1102 causes disturbing reflection which the at least one protective arrangement 600 eliminates or alleviates. However, because the reflections convert to a lower section of the intermediate band, the remaining disturbing reflections may be even more efficiently eliminated or alleviated.

The physical distance between the microwave reflector 300 and the reception antenna 104 may be larger than a physical distance between one or more reflective surfaces that are a cause of interference in the propagation path and the reception antenna 104. Such surfaces may be related to the lens 1102 or any structures around the measurement signal, for example.
the transmission and/or reception antenna 102, 104 comprises material surfaces which may a cause of undesired reflections associated with interaction with the electromagnetic radiation. Such surfaces may be related to the lens 1102 and/or any structures in vicinity of the measurement signal, for example.

Figure 11 is a flow chart of the measurement method. In step 1100, electromagnetic radiation is output by an electromagnetic source 100 in a millimeter or micrometer wave band. In step 1102, the electromagnetic radiation is transmitted toward the moving fiber web 10 by a transmission antenna 102. In step 1104, a counterpart interacts with the electromagnetic radiation passed through the moving fiber web 10. In step 1106, the electromagnetic radiation passed at least once through the moving fiber web 10 is received by a reception antenna 104, reference information relating to a phase value and an attenuation value of the electromagnetic radiation caused by a physical length of a propagation path between the transmission antenna 102 and the reception antenna 104 being available. In step 1108, at least one of dry stuff content, weight of water per unit of area, moisture and grammage of the moving fiber web 10 is determined by a signal processing device 106 based on the reference information, and a measured attenuation value and a measured phase value caused by the fiber web 10.

The method determining the properties of the web 10 shown in Figure 11 may at least partly be implemented as a logic circuit solution or computer program. The computer program may be placed on a computer program distribution means for the distribution thereof. The computer program distribution means is readable by a data processing device, and it encodes the computer program commands, determines the properties of the web 10 and optionally controls the processes of the apparatus.

It will be obvious to a person skilled in the art that, as technology advances, the inventive concept can be implemented in various ways. The invention and its embodiments are not limited to the example embodiments described above but may vary within the scope of the claims.

## Claims

1. An apparatus for measuring a moving fiber web (10), **characterized in that** the apparatus comprises
an electromagnetic source (100) and a transmission antenna (102), the electromagnetic source (100) being configured to output electromagnetic radiation in a millimeter or micrometer wave band, and the transmission antenna (100) being configured to transmit the electromagnetic radiation toward the moving fiber web (10);
a counterpart (104, 300) to the transmitting antenna (102) configured to interact with the electromagnetic radiation passed through the moving fiber web (10);
a reception antenna (104) configured to receive the electromagnetic radiation passed at least once through the moving fiber web (10), reference information relating to a phase value and an attenuation value of the electromagnetic radiation caused by a physical length of a propagation path between the transmission antenna (102) and the reception antenna (104) being available; and
a signal processing device (106) configured to determine at least one of dry stuff content, weight of water per unit of area, moisture and grammage of the moving fiber web (10) based on the reference information, and a measured attenuation value and a measured phase value caused by the fiber web (10).

2. The apparatus of claim 1, **characterized in that** the electromagnetic source (100) is configured to perform a continuous sweep of the electromagnetic radiation over a frequency range and/or an output of discrete frequencies within the frequency range, and the transmission antenna (100) is configured to transmit the electromagnetic radiation of the frequency range toward the moving fiber web (10) through the propagation path to the reception antenna (104).

3. The apparatus of claim 1, **characterized in that** the signal processing device (106) is configured to mix the electromagnetic radiation received by the reception antenna (104) to an intermediate frequency band with a reference electromagnetic signal that has a known frequency and a known phase with respect to the electromagnetic radiation that is output; and
the signal processing device (106) is configured to determine the measured phase value and the measured attenuation value relating to the intermediate frequency.

4. The apparatus of claim 1, **characterized in that** the signal processing device (106) is configured to mix the electromagnetic radiation, which is continuously swept over a frequency range and/or output as discrete frequencies within the frequency range by the electromagnetic source (100) and received by the reception antenna (104), to an intermediate frequency band with the electromagnetic radiation that is output by the electromagnetic source (100) with a known delay;
convert the intermediate frequency band from a time domain to a frequency domain; and
high-pass filter the intermediate frequency band for decreasing potentially existing undesired reflections.

5. The apparatus of claim 1, **characterized in that** the signal processing device (106) is configured to mix the electromagnetic radiation, which is continuously swept over a frequency range and/or output as discrete frequencies within the frequency range by the electromagnetic source (100) and received by the reception antenna (104), to an intermediate frequency band with the electromagnetic radiation that is output by the electromagnetic source (100) with a known delay;
convert the intermediate frequency band from a time domain to a frequency domain; and
filter out, from the intermediate frequency band, interfering frequencies that potentially include electromagnetic reflections from one or more objects different from the moving fiber web (10).

6. The apparatus of claim 1, **characterized in that** the transmission antenna (102) and the reception antenna (104) are on the same side of the fiber web (10), and the counterpart, which is located on the opposite side of the fiber web (10) to the transmission antenna (102) and the reception antenna (104), comprises a reflector (300), the reflector (300) being configured to reflect the electromagnetic radiation transmitted by the transmitter antenna (102) through the fiber web (10) to the reception antenna (104).

7. The apparatus of any of the preceding claims, **characterized in that** the apparatus comprises an inductive distance measurement arrangement (400) that is configured to measure an effective distance relating deterministically to the physical length of the propagation path travelled by the electromagnetic radiation for the reference information.

8. The apparatus of any of the preceding claims, **characterized in that** the apparatus comprises an annular electromagnetic inductor (500) and a counter inductor (504) on the opposite side of the moving fiber web (10) with respect to the inductor (500) for producing the reference information relating to the physical length of the propagation path travelled by the electromagnetic radiation based on inductive interaction therebetween; and
the transmission antenna (102) is configured to direct the electromagnetic radiation through a middle of an aperture (502) of the annular inductor (500) to the moving fiber web (10).

9. The apparatus of any of the preceding claims, **characterized in that** the physical distance between the microwave reflector (300) and the reception antenna (104) is larger than a physical distance between one or more reflective surfaces that are a cause of interference in the propagation path and the reception antenna (104).

10. The apparatus of claim 1, **characterized in that** the transmission and/or reception antenna (102, 104) comprises material surfaces which are a cause of undesired reflections associated with interaction with the electromagnetic radiation.

11. The apparatus of claim 1, **characterized in that** the apparatus comprises a transceiver antenna, which is configured to act both as a transmission antenna (102) and the reception antenna (104) in order to both transmit and receive the electromagnetic radiation.

12. The apparatus of any of the preceding claims, **characterized in that** the apparatus comprises at least one protective arrangement (600) which is located in the propagation path of the electromagnetic radiation on either one side of the fiber web (10) or both sides of the fiber web (10); and the protective arrangement (600) is configured to deflect undesired reflections of the electromagnetic radiation away from the reception antenna (104).

13. The apparatus of claim 1, **characterized in that** the signal processing device (106) comprises
one or more processors (700); and
one or more memories (702) including computer program code;
the one or more memories (702) and the computer program code configured to, with the one or more processors (700), cause apparatus at least to:
determine at least one of the dry stuff content, the weight of water per unit of area, the moisture and the grammage of the moving fiber web (10).

14. A method of measuring a moving fiber web (10), **characterized by**
outputting (1100) by an electromagnetic source (100) electromagnetic radiation in a millimeter or micrometer wave band;
transmitting (1102), by a transmission antenna (102), the electromagnetic toward the moving fiber web (10);
interacting (1104), by a counterpart (104, 300), with the electromagnetic radiation passed through the moving fiber web (10);
receiving (1106), by a reception antenna (104), the electromagnetic radiation passed at least once through the moving fiber web (10), reference information relating to a phase value and an attenuation value of the electromagnetic radiation caused by a physical length of a propagation path between the transmission antenna (102) and the reception antenna (104) being available; and
determining (1108), by a signal processing device (106), at least one of dry stuff content, weight of water per unit of area, moisture and grammage of the moving fiber web (10) based on the reference information, and a measured attenuation value and a measured phase value caused by the fiber web (10).
